## Europäisches Patentamt
## European Patent Office
## Office européen des brevets

(11) Veröffentlichungsnummer: **0 042 621**
**B1**

(12) **EUROPÄISCHE PATENTSCHRIFT**

(45) Veröffentlichungstag der Patentschrift:
31.10.84

(21) Anmeldenummer: **81104861.0**

(22) Anmeldetag: **23.06.81**

(51) Int. Cl.³: **H 04 L 25/49,** H 04 L 25/20, H 03 K 13/01

(54) Regenerator für mehrstufige digitale Signale.

(30) Priorität: **25.06.80 DE 3023833**
**08.08.80 DE 3030172**

(43) Veröffentlichungstag der Anmeldung:
**30.12.81 Patentblatt 81/52**

(45) Bekanntmachung des Hinweises auf die Patenterteilung:
**31.10.84 Patentblatt 84/44**

(84) Benannte Vertragsstaaten:
**AT BE CH DE FR GB IT LI NL SE**

(56) Entgegenhaltungen:
**EP - A - 0 004 008**
**CH - A - 589 975**
**DE - B - 2 827 958**
**DE - B - 2 833 267**

**NACHRICHTENTECHNISCHE ZEITSCHRIFT, 27. Jahrgang, Heft 2, Februar 1974, Berlin, DE., H. MARKO, R. WEISZ, G. BINKERT "Impulsregenerator und Regenerativverstärker des Digitalverstärker-Hybridsystems für 280 Mbit/s und 560 Mbit/s", Selten 61-66**

(73) Patentinhaber: **Siemens Aktiengesellschaft, Berlin und München Wittelsbacherplatz 2, D-8000 München 2 (DE)**

(72) Erfinder: **Meyer, Fritz, Dr.-Ing., Wifostrasse 4, D-8034 Germering (DE)**
Erfinder: **Jungmeister, Hans Günther, Dr., Kornwegerstrasse 4, D-8000 München 70 (DE)**

## Beschreibung

Die Erfindung betrifft einen Regenerator entsprechend den Oberbegriffen der Ansprüche 1 bzw. 2. Durch die Zusammenfassung von digitalen Zeitmultiplexsignalen niedriger Hierarchiestufe und damit niedrigerer Übertragungsgeschwindigkeit zu solchen höheren Hierarchiestufe und durch die Einführung der digitalen Vermittlungstechnik ergibt sich die Notwendigkeit, Übertragungsstrecken mit sehr hoher Schrittgeschwindigkeit aufzubauen. Derartige Übertragungsstrecken haben Schrittgeschwindigkeiten im Bereiche einiger hundert M Baud, entsprechend einer CCITT-Empfehlung insbesondere solche von 565 M Baud. Wegen der bei diesen Frequenzen recht hohen Kabeldämpfung ist es notwendig, in vergleichsweise geringen Abständen in die Übertragungsstrecke Regeneratoren für das Übertragungssignal einzusetzen, wobei an diese Regeneratoren erhebliche Anforderungen hinsichtlich der Verarbeitungsgeschwindigkeit gestellt werden. Zur Erhöhung der Übertragungskapazität bei gleicher Schrittgeschwindigkeit wird von der Möglichkeit Gebrauch gemacht, anstelle binärer Signale mehrstufige Signale zu übertragen. Bei der Übertragung mehrstufiger Signale steigen die Anforderungen an die Regeneratoren weiter an; im Hinblick auf die Schwierigkeiten bei der Realisierung von mehrpegeligen Logikschaltungen hat sich eine Regenerationsmethode durchgesetzt, bei der die mehrstufigen Signale in unipolare Signalzüge umgesetzt und diese jeweils getrennt regeneriert werden.

Regeneratoren zur amplituden- und zeitmäßigen Regenerierung mehrstufiger digitaler Signale sind also bereits bekannt. Aus der DE-A-2 827 958 ist ein Regenerator für in einem partialresponse-Code vorliegende mehrstufige digitale Signale hoher Schrittgeschwindigkeit bekannt. Dieser Regenerator enthält eingangsseitig eine Pegelweiche mit Abtaststufe, durch die die ankommenden Signale in jeweils zwei Signalzügen mit unterschiedlichen Amplitudenbereichen aufgeteilt und außerdem eine zeitmäßige Regenerierung vorgenommen wird. Zur Amplitudenentscheidung werden die beiden Signalteile in binäre Signale zerlegt, die in den einzelnen Stufen eines Tunneldioden enthaltenden Amplitudenentscheiders amplitudenmäßig regeneriert werden. Auch aus der DE-A-2 833 267 ist ein Verfahren zur Regenerierung eines mehrstufigen digitalen Signales mit im GHz-Bereich auftretenden Anteilen und ein entsprechender Regenerator bekannt. Der entsprechende Regenerator enthält eine besondere mit Tunneldioden bestückte bistabile Kippstufe, der das zu regenerierende Signal mit einer solchen Amplitude zugeführt wird, daß erst beim Auftreten eines Setzpulses ein Umschalten der bistabilen Kippstufe erfolgt. Für mehrstufige digitale Signale sind mehrere derartige bistabile Kippstufen, die jeweils in einem anderen Amplitudenbereich wirksam sind, parallelgeschaltet.

Die genannten Regeneratoren bieten die Möglichkeit, digitale Signale mit einer Vielzahl von beispielsweise sieben Amplitudenstufen zu regenerieren. Der dafür erforderliche Aufwand ist bei der Regenerierung von vierstufigen digitalen Signalen nicht gerechtfertigt, außerdem erfordert eine größere Zahl an Schaltungselementen auch einen insgesamt höheren Betriebsstrom; es kann sich außerdem eine höhere Signallaufzeit ergeben.

Nach erfolgter Regenerierung werden die einzelnen Teilsignale beispielsweise mittels einer bewerteten Addition zu einem neuen Signal zusammengefügt.

Aus der CH-A5-589 975 ist ein Regenerator zur amplituden- und zeitmäßigen Regenerierung eines mehrstufigen digitalen Signals hoher Schrittgeschwindigkeit bekannt. Dieser Regenerator enthält zwei, einem Eingangsübertrager nachgeschaltete Differenzverstärker, die jeweils eine aus dem pseudoternären Eingangssignal erzeugte binäre Signalfolge amplitudenmäßig regeneriert an ein getaktetes D-Flipflop abgeben, die Regenerierung mehr als dreistufiger digitaler Signale ist mit der beschriebenen Anordnung nicht möglich.

Die Aufgabe der vorliegenden Erfindung besteht nun darin, eine Möglichkeit zur amplituden- und zeitmäßigen Regenerierung eines vierstufigen und eines achtstufigen digitalen Signals anzugeben, die bei vergleichsweise geringem Aufwandauf die Verwendung von Tunneldioden verzichtet und zur Verarbeitung digitaler Signale mit im GHz-Bereich auftretenden Anteilen geeignet ist.

Die Aufgabe wird durch einen Regenerator entsprechend den Kennzeichen der Patentansprüche 1 bzw. 2 gelöst.

Die Erfindung macht dabei in vorteilhafter Weise von der Möglichkeit Gebrauch, durch Umschalten einer Entscheiderstufe und durch Kombination mehrerer Differenzverstärker mittels eines Multiemittertransistors den Aufwand wesentlich zu verringern. Die erfindungsgemäße Regeneratoranordnung ist wegen ihres übersichtlichen und einfachen Aufbaus und wegen der leichten Integrierbarkeit überraschenderweise auch bei der Regenerierung mehrstufiger digitaler Signale mit Schrittgeschwindigkeiten auch unter 100 M Baud vorteilhaft einsetzbar. Zweckmäßige Weiterbildungen der Regeneratoren nach der Erfindung sind in den Patentansprüchen 3 bis 9 näher erläutert.

Die Erfindung soll im folgenden anhand der Zeichnung näher erläutert werden. In der Zeichnung zeigt

Fig. 1 ein erstes Entscheiderelement nach dem Stand der Technik für binäre Signale,

Fig. 2 ein zweites Entscheiderelement mit zwei Schwellenspannungen,

Fig. 3 ein drittes Endscheiderelement mit vier Schwellenspannungen,

Fig. 4 einen erfindungsgemäßen Regenerator als Kombination der Anordnungen nach den Fig. 1 und 2, und

Fig. 5 einen erfindungsgemäßen Regenerator als Kombination der Anordnungen nach den Fig. 1, 2 und 3.

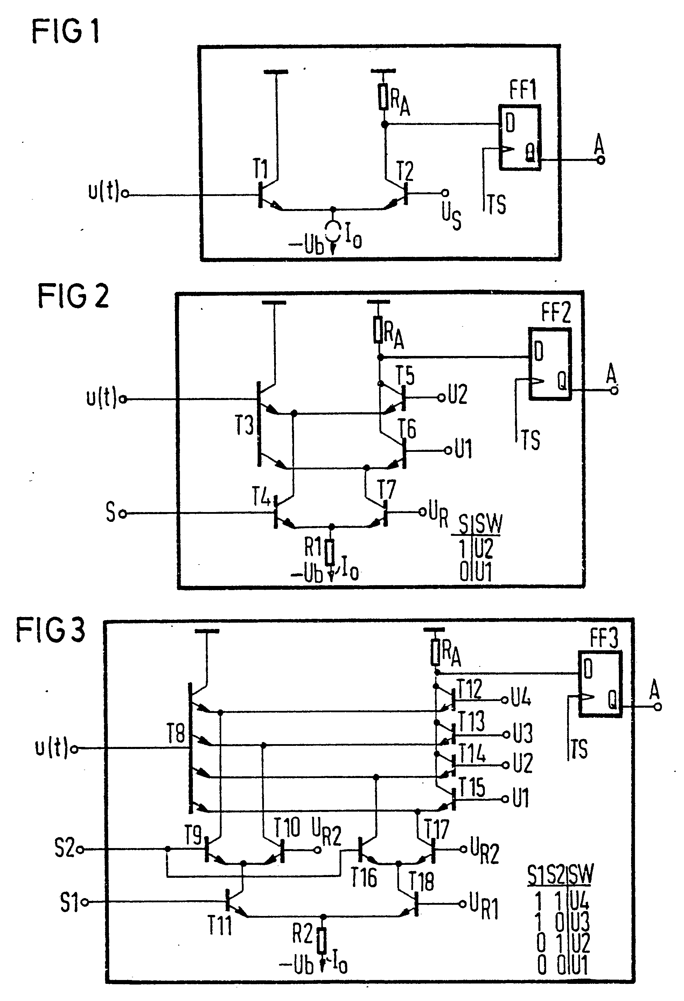

Das Entscheiderelement nach Fig. 1 entsprechend dem Stand der Technik besteht aus einem Differenzverstärker und einem diesem nachgeschalteten getakteten ersten D-Flipflop FF1, an dessen Q-Ausgang der Ausgang A für das amplituden- und zeitmäßig regenerierte Signal angeschlossen ist.

Differenzverstärker mit Emitterkopplung bestehen in bekannter Weise aus zwei Transistorverstärkerstufen T1, T2, wobei entsprechend der Fig. 1 die Emitteranschlüsse der Transistoren miteinander und über eine Stromquelle mit der Betriebsspannung verbunden sind, und die Stromquelle durch einen hochohmigen Widerstand realisiert ist. Der Basisanschluß eines der beiden Transistoren dient als Signaleingang u(t), während am Basisanschluß des anderen Transistors eine Referenzspannung $U_s$ anliegt, die in ihrer Größe zwischen der maximalen und der minimalen Signalamplitude liegt, so daß bei Anliegen der minimalen Signalamplitude am Signaleingang der Eingangstransistor abgeschaltet ist und der mit der Referenzspannungsquelle verbundene Transistor Strom führt. Beim Überschreiten der Referenzspannung durch die Eingangssignalspannung wird der Eingangstransistor leitend und der mit der Referenzspannung verbundene Transistor gesperrt, so daß in diesem Falle die Ausgangssignale an den Kollektoranschlüssen wechseln. Die Referenzspannung stellt also eine Schwellenspannung für den Differenzverstärker dar, der Eingangstransistor leitet erst bei Überschreiten der Schwellenspannung durch das Eingangssignal.

Bei Auftreten von Impulsen mit mehreren, beispielsweise drei Amplitudenstufen ist jeweils die um Eins geringere Anzahl an Schwellenspannungen, also beispielsweise zwei Schwellenspannungen, erforderlich. Es ist nun möglich, für jede dieser Schwellen einen Differenzverstärker mit D-Flipflop entsprechend Fig. 1 vorzusehen, so daß eine der Anzahl der Schwellenspannungen entsprechende Anzahl an Differenzverstärkern eingangsseitig parallelgeschaltet ist. Am Ausgang jedes der Differenzverstärker erscheint beim Überschreiten der jeweiligen Schwelle ein Impuls, bei zwei Schwellenspannungen entstehen also ausgangsseitig zwei binäre Impulszüge. Die Aufteilung und Amplitudenentscheidung von Impulsen mit mehreren Amplitudenstufen durch derartige kombinierte Differenzverstärker hat bei der Amplitudenentscheidung in Impulsregeneratoren für mehrstufige digitale Signale besondere Bedeutung. Das D-Flipflop FF erhält das Taktsignal TS entsprechend der Schrittgeschwindigkeit der vom Differenzverstärker amplitudenmäßig regenerierten Signale. Differenzverstärker und Flipflop bilden zusammen ein Entscheiderelement.

Die in der Fig. 2 dargestellte Differenzverstärkeranordnung als Teil eines zweiten Entscheiderelements ist mittels eines Steuersignals S zwischen den beiden Schwellenwerten U1 und U2 umschaltbar. Sie enthält einen ersten Multiemittertransistor T3, dessen Basisanschluß mit dem Anschluß für die Eingangssignale u(t) und dessen Kollektoranschluß mit Bezugspotential verbunden sind. Der erste Multiemittertransistor T3 enthält zwei getrennte Emitteranschlüsse, wobei der erste Emitteranschluß mit dem Kollektoranschluß eines vierten Transistors T4 und mit dem Emitteranschluß eines fünften Transistors T5 verbunden ist. Der zweite Emitteranschluß des Multiemittertransistors ist mit dem Emitteranschluß eines sechsten Transistors T6 und dem Kollektoranschluß eines siebten Transistors T7 unmittelbar verbunden. Die Emitteranschlüsse des vierten Transistors T4 und des siebten Transistors T7 sind miteinander und über einen ersten Widerstand R1 mit einer Betriebsspannungsquelle —Ub verbunden, wobei der erste Widerstand R1 so hochohmig ist, daß über ihn ein von den Schaltzuständen der Regeneratoranordnung praktisch unabhängiger Strom $I_o$ eingeprägt wird. Der Basisanschluß des vierten Transistors T4 ist mit einem Eingangsanschluß für ein Steuersignal S zur Umschaltung der Schwellenwerte verbunden, während der Basisanschluß des siebten Transistors T7 mit einem Anschluß für eine Referenzspannung $U_R$ verbunden ist; diese Referenzspannung liegt in ihrer Größe zwischen dem minimalen und dem maximalen Wert des Steuersignals S. Mit den Basisanschlüssen des fünften und des sechsten Transistors T5, T6 sind Anschlüsse für die Schwellenspannung U2 bzw. U1 verbunden, während die Kollektoranschlüsse dieser Transistoren miteinander mit dem D-Eingang des nachgeschalteten D-Flipflops FF und über einen Ausgangswiderstand $R_A$ mit Bezugspotential verbunden sind. Der Q-Ausgang des D-Flipflops ist mit dem Regeneratorausgang A verbunden.

In Abhängigkeit vom anliegenden Steuersignal ist entweder der Transistor T4 oder der Transistor T7 der Differenzverstärkeranordnung leitend. Liegt dabei der dem logischen Nullpegel entsprechende Minimalpegel des Steuersignals am Basisanschluß des Transistors T4 an, dann ist der Transistor T7 leitend und damit der aus den Transistoren T3 und T6 gebildete Differenzverstärker eingeschaltet. In diesem Falle ist also die Schwellenspannung U1 wirksam, die Amplitude des Eingangsignals u(t) erzeugt ein vom logischen Nullpegel verschiedenes Ausgangssignal,wenn diese Amplitude die Schwellenspannung U1 überschreitet. Bei Anliegen eines dem logischen Einspegel entsprechenden Steuersignals am Basisanschluß des Transistors T4 ist dieser Transistor leitend und damit der aus dem Transistor T3 und dem Transistor T5 gebildete Differenzverstärker eingeschaltet. In diesem Falle wird ein vom logischen Nullpegel verschiedenes Ausgangssignal erzeugt, wenn die Eingangsspannung u(t) die Schwellenspannung U2 überschreitet. Das dritte Entscheiderelement nach der Fig. 3 enthält eine Differenzverstärkeranordnung mit vier umschaltbaren Schwellenspannungen U1, U2, U3, U4; im Hinblick auf die Verwendung binärer Steuersignale sind dementsprechend zwei Steuersignale S1 und S2 erforderlich. Die Differenzverstärkeranordnung nach der Fig. 3 enthält einen mit der Basis an den Signaleingang angeschlossenen Multiemittertransistor T8 mit vier Emitteranschlüssen, wobei der erste Emitteranschluß mit dem Kollektoranschluß eines neunten Transistors T9 und mit dem Emitteranschluß eines zwölften Transistors T12 verbunden ist, der zweite Emitteranschluß mit dem zweiten Kollektoranschluß eines zehnten Transistors T10 und mit dem Emitteranschluß eines dreizehnten Transistors T13 verbunden ist, der dritte Emitteranschluß mit dem Kollektoranschluß eines sechzehnten Transistors T16 und dem Emitteranschluß eines vierzehnten Transistors T14 und der vierte Emitteranschluß mit dem Kollektoranschluß eines siebzehnten Transistors T17 und dem Emitteranschluß eines fünfzehnten Transistors T15 verbunden ist. Die Emitteranschlüsse des neunten und des zehnten Transistors T9, T10 sind miteinander und mit dem Kollektoranschluß eines elften Transistors T11 verbunden. Entsprechend sind die Emitteranschlüsse des sechzehnten und des siebzehnten Transistors T16, T17 miteinander und mit dem Kollektoranschluß eines achtzehnten Transistors T18 verbunden. Die Emitteranschlüsse des elften Transistors T11 und des achtzehnten Transistors T18 sind wiederum miteinander und über einen zweiten Widerstand R2 mit dem Betriebsspannungsanschluß —Ub verbunden. Der Anschluß für das erste Steuersignal S1 ist mit dem Basisanschluß des Transistors T11 verbunden, während der Anschluß für das zweite Steuersignal S2 mit den Basisanschlüssen der Transistoren T9 und T16 verbunden ist. Der Basisanschluß des achtzehnten Transistors T18 ist an eine Quelle für eine erste Referenzspannung $U_{R1}$ angeschlossen, während die Basisanschlüsse des zehnten Transistors T10 und des siebzehnten Transistors T17 mit Anschlüssen für eine zweite Referenzspannung $U_{R2}$ verbunden sind, wobei die zweite Referenzspannung einen positiveren Wert als die erste Referenzspannung aufweist. Die Basisanschlüsse des zwölften, dreizehnten, vierzehnten und fünfzehnten Transistors T12, T13, T14, T15 sind jeweils getrennt mit Anschlüssen für die Schwellenspannungen U4, U3, U2, U1 verbunden, wobei diese Schwellenspannungen ebenfalls von U1 ausgehend jeweils einen positiven Wert aufweisen und mittels eines Spannungsteilers erzeugt werden. Die Kollektoranschlüsse der Transistoren T12 ... T15 sind miteinander und über einen Abschlußwiderstand $R_A$ mit Bezugspotential sowie mit dem D-Eingang des nachgeschalteten D-Flipflops verbunden.

Die Funktion des dritten Entscheiderelements nach der Fig. 3 entspricht unter Berücksichtigung der größeren Anzahl an Schwellenspannungen und Steuersignalen der Funktion des zweiten Entscheiderelements nach der Fig. 2.

Unter der Voraussetzung, daß bei beiden Steuersignalen der Minimalwert entsprechend dem logischen Nullpegel anliegt, sind die Transistoren T18 und T17 leitend und damit der aus dem Transistor T15 gebildete Differenzverstärker eingeschaltet; in diesem Fall ist die Schwellenspannung U1 wirksam.

Wechselt von diesem Zustand ausgehend, das zweite Steuersignal vom logischen Null- auf den logischen Eins-Pegel, wobei diese Pegel die zweite Referenzspannung $U_{R2}$ überschreitet, dann wird statt des Transistors T17 der Transistor T16 eingeschaltet, so daß dadurch der aus dem Transistor T8 und dem Transistor T14 gebildete Differenzverstärker und damit die zweite Schwellenspannung U2 wirksam sind.

Wechselt das Steuersignal S1 vom logischen Null-Pegel auf den logischen Eins-Pegel und überschreitet damit die erste Referenzspannung $U_{R1}$, während das zweite Steuersignal S2 auf dem logischen Null-Pegel verbleibt, dann wird der Transistor T11 und der Transistor T10 leitend geschaltet. Damit ist der aus dem Transistor T8 und dem Transistor T13 gebildete Differenzverstärker eingeschaltet und damit die Schwellenspannung U3 für das Eingangssignal u(t) wirksam. Entsprechend ist bei Auftreten des logischen Eins-Pegels an den Anschlüssen für das Steuersignal S1 und das Steuersignal S2 der Transistor T11 und der Transistor T9 leitend geschaltet. Damit ist der aus dem Transistor T8 und dem Transistor T12 gebildete Differenzverstärker eingeschaltet, so daß in diesem Falle die vierte Schwellenspannung U4 wirksam ist.

Die Erzeugung der binären Steuersignale erfolgt für eine Differenzverstärkeranordnung mit Flipflop nach der Fig. 2 mittels eines Differenzverstärkers nach der Fig. 1, wobei dessen Schwellenspannung $U_S$ in ihrem Wert zwischen den Schwellenspannungen U1 und U2 der Differenzverstärkeranordnung nach der Fig. 2 liegen muß. Entsprechend können die Steuersignale S1 und S2 für die Differenzverstärkeranordnung nach der Fig. 3 mittels zweier Differenzverstärkeranordnungen nach der Fig. 1 erzeugt werden.

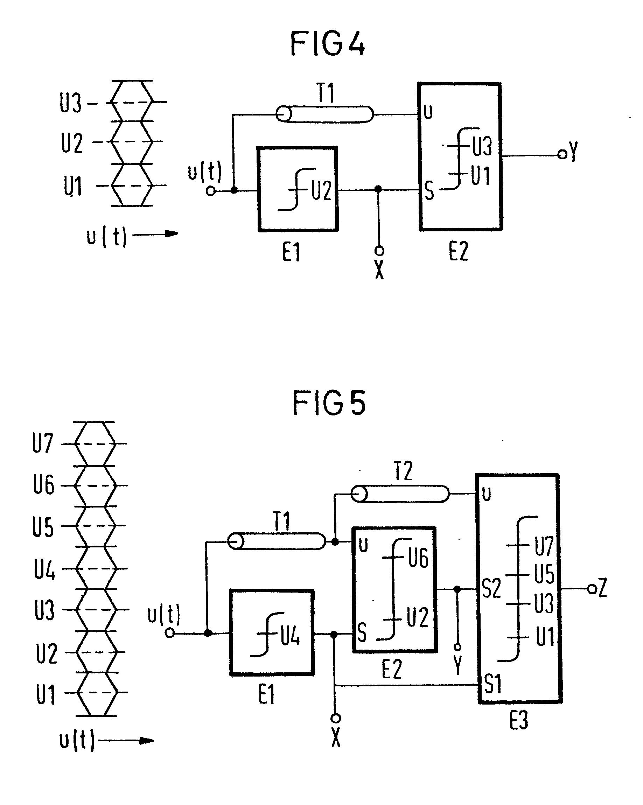

Die Fig. 4 zeigt eine komplette Regeneratorschaltung für ein vierstufiges Digitalsignal mit den drei Schwellenspannungen U1, U2, U3 die im linken Teil der Fig. 4 in Form des bekannten Augendiagrammes dargestellt sind. Auf die mittlere Schwellenspannung U2 ist dabei das erste Entscheiderelement E1 eingestellt, das der Anordnung nach der Fig. 1 entspricht. Die Schwellenspannungen U1 und U3 sind die Schaltschwellen des zweiten Entscheiderelementes E2, das der Anordnung nach der Fig. 2 entspricht. Der Signaleingang des ersten Entscheiderelementes ist unmittelbar mit dem Eingang für die zu regenerierenden Signale u(t) verbunden, während der Eingang des zweiten Entscheiderelementes E2 über eine erste Verzögerungsanordnung T1 an den Signaleingang angeschlossen ist. Im Hinblick auf die beim Ausführungsbeispiel auftretenden hohen Schrittgeschwindigkeiten hat sich der Einsatz einer Verzögerungsleitung in der Verzögerungsanordnung T1 als zweckmäßig erwiesen. Die Laufzeit der Impulse durch diese Leitung entspricht dabei der Impulslaufzeit durch das erste Entscheiderelement E1.

Zur Erläuterung der Wirkungsweise der Regeneratoranordnung nach Fig. 4 sei zunächst angenommen, daß ein Impuls mit einer Amplitude wenig oberhalb der ersten Schwellenspannung U1, aber unterhalb der zweiten Schwellenspannung U2 empfangen wird. In diesem Falle bleibt das erste Entscheiderelement in seinem Ausgangszustand, an seinem Ausgang und damit am Ausgang für das erste der beiden regenerierten Teilsignale X, Y liegt der logische Null-Pegel an, ein Steuersignal S an das zweite Entscheiderelement E2 wird nicht abgegeben. Nach Durchlaufen der Verzögerungsleitung T1, also etwa nach einer Bitzeit, wird das zweite Entscheiderelement E2 durch das Eingangssignal umgeschaltet, da dessen erste Schwellenspannung U1 überschritten wird. Damit wird am Ausgang dieses Entscheiderelementes ein Impuls mit dem logischen Eins-Pegel abgegeben, so daß die Ausgangssignale X, Y die im Ruhezustand jeweils dem logischen Nullpegel entsprechen, nun die logischen Pegel 0 und 1 angenommen haben.

Bei Empfang eines Impulses mit einer Amplitude wenig oberhalb der zweiten Schwellenspannung U2 wird das erste Entscheiderelement E1 sofort umgeschaltet und gibt an seinem Ausgang ein Signal entsprechend dem logischen Eins-Pegel ab. Dieses Signal dient als Steuersignal S für das zweite Entscheiderelement E2, wodurch dieses von der Schwellenspannung U1 auf die Schwellenspannung U3 umgeschaltet wird. Dadurch erfolgt kein Umschalten des zweiten Entscheiderelement E2 durch das Eingangssignal, da letztere die Schwellenspannung U3 nicht überschreitet. Der Ausgangspegel des zweiten Entscheiderelementes E2 bleibt damit auf dem Nullpegel.

Bei Empfang eines Impulses mit einer Amplitude, die die dritte Schwellenspannung U3 überschreitet, erfolgt zunächst ein Umschalten des ersten Entscheiderelementes E1 und nach etwa einer Bitdauer auch des zweiten Entscheiderelementes E2. In diesem Falle wird also an den beiden Ausgängen X bzw. Y jeweils ein Impuls entsprechend dem logischen Eins-Pegel abgegeben.

Die Fig. 5 zeigt einen Regenerator für ein achtstufiges digitales Signal, dieser Regenerator stellt eine Erweiterung des Regenerators nach Fig. 4 um das Entscheiderelement entsprechend Fig. 3 dar. Die einzelnen Schwellenspannungen der Entscheiderelemente E1, E2, E3 sind in die Entscheider eingetragen, wobei das erste Entscheiderelement E1 wiederum auf die mittlere Schwellenspannung der Regeneratoranordnung eingestellt ist. Entsprechend der Fig. 5 ist dies die Schwellenspannung U4. Dadurch werden die verbleibenden Schwellenspannungen in einen ersten Teil U1, U2, U3 und einen zweiten Teil U5, U6, U7 aufgeteilt. Das zweite Entscheiderelement E2 ist nun analog auf die mittleren Schwellenspannungen U2, U6 der beiden Teile eingestellt. Die restlichen Schwellenspannungen sind im dritten Entscheiderelement E3 enthalten. Die Erzeugung der Steuersignale erfolgt dabei jeweils durch das vorgeschaltete Entscheiderelement. Während der Signaleingang des ersten Entscheiderelementes E1 direkt mit dem Eingang für die zu regenerierenden Signale u(t) verbunden ist, ist der Signaleingang des zweiten Entscheiderelementes E2 über die erste Verzögerungsleitung T1 an den Eingang für die zu regenerierenden Signale angeschlossen. Der Signaleingang des dritten Entscheiderelementes E3 könnte ebenfalls an den Eingang für die zu regenerierenden Signale anschlossen werden, in diesem Falle müßte die Laufzeit durch die entsprechende Verzögerungsanordnung der Impulslaufzeit durch die Entscheiderelemente E1 und E2 entsprechen. Im vorliegenden Falle wurde der Signaleingang des dritten Entscheiderelementes E3 über eine zweite Verzögerungsleitung T2 an den Signaleingang des zweiten Entscheiderelementes E2 angeschlossen. Die Verzögerungsleitung T2 hat nur eine Verzögerung entsprechend der Signallaufzeit durch das zweite Entscheiderelement E2.

Am Ausgang des ersten Entscheiderelementes E1 ist ein erstes regeneriertes Ausgangssignal X entnehmbar, das gleichzeitig das Steuersignal für das zweite Entscheiderelement und das Steuersignal S1 für das dritte Entscheiderelement E3 darstellt. Am Ausgang der zweiten Entscheideranordnung E2 ist ein zweites regeneriertes Ausgangssignal Y entnehmbar, das gleichzeitig als Steuersignal S2 für das dritte Entscheiderelement E3 dient. Am Ausgang des dritten Entscheiderelementes E3 ist ein drittes regeneriertes Ausgangssignal Z entnehmbar.

Zur Erläuterung der Funktion der Anordnung nach Fig. 5 sei zunächst angenommen, daß nur Störsignale am Signaleingang empfangen werden, die die erste Schwellenspannung U1 nicht überschreiten. In diesem Falle steht an den Ausgängen aller drei Entscheiderelemente der logische Null-Pegel.

Bei Empfang eines Eingangssignals mit einer die erste Schwellenspannung U1 weniger überschreitenden Amplitude bleiben die Entscheiderelemente E1 und E2 in ihrem Ausgangszustand, während das Entscheiderelement E3 nach etwa zwei Bitzeiten durch das Eingangssignal umgeschaltet wird und ein Ausgangssignal Z entsprechend dem logischen Eins-Pegel abgibt. Bei Empfang eines Impulses mit einer Amplitude wenig oberhalb der zweiten Schwellenspannung U2 wird nach etwa einer Bitdauer das zweite Entscheiderelement E2 umgeschaltet und gibt ein Ausgangssignal Y entsprechend dem logischen Eins-Pegel ab. Dieses Signal verursacht außerdem eine Umschaltung von der Schwellenspannung U1 auf die Schwellenspannung U3 im dritten Entscheiderelement E3, so daß dieses durch das Eingangssignal nicht umgeschaltet wird. Erst bei Empfang eines Impulses mit einer die dritte Schwellenspannung U3 überschreitenden Amplitude wird neben dem zweiten Entscheiderelement E2 auch das dritte Entscheiderelement E3 umgeschaltet. Bei Empfang eines die vierte Schwellenspannung U4 wenig überschreitenden Impulses wird schließlich auch das erste Entscheiderelement E1 umgeschaltet. Dadurch taucht erstmalig im Ausgangssignal X und im Steuersignal S bzw. S1 ein Impuls mit dem logischen Eins-Pegel auf, durch diesen erfolgt außerdem eine Umschaltung des zweiten Entscheiderelementes E2 von der Schwellenspannung U2 auf die Schwellenspannung U6 und des dritten Entscheiderelementes E3 von der Schwellenspannung U3 auf die Schwellenspannung U5. Durch diese Umschaltungen verursacht, geben das zweite und das dritte Entscheiderelement E2 in diesem Falle kein Ausgangssignal ab. Überschreitet die Amplitude eines Eingangsimpulses die fünfte Schwellenspannung U5 wenig, dann wird neben dem ersten Entscheiderelement E1 auch das dritte Entscheiderelement E3 umgeschaltet. Bei Empfang eines Impulses mit einer Amplitude wenig oberhalb der sechsten Schwellenspannung U6 wird neben dem ersten Entscheiderelement E1 auch das zweite Entscheiderelement trotz Umschaltung von der Schwellenspannung U2 auf die Schwellenspannung U6 geschaltet. Dadurch gibt dieses Entscheiderelement ein zweites Steuersignal S2 ab, das die Schwellenspannung im dritten Entscheiderelement E 3 von U5 auf U7 umschaltet. Wird schließlich ein Impuls mit einer Amplitude empfangen, die auch die siebte Schwellenspannung U7 überschreitet, dann wird von allen drei Entscheiderelementen E1, E2, E3 ein Signal entsprechend dem logischen Eins-Pegel abgegeben.

Durch Kombination entsprechender Entscheiderelemente ist es möglich, in analoger Weise auch Regeneratoranordnungen für Signale mit anderen als den erläuterten Amplitudenstufen zu realisieren.

Die Quellen für die Referenzspannungen, die mit den zweiten Eingängen der Differenzverstärker verbunden sind, können auch entfallen. In diesem Fall sind die entsprechenden Anschlüsse mit Quellen für die gegenphasigen Steuersignale zu verbinden.

## Patentansprüche

1. Regenerator zur amplituden- und zeitmäßigen Regenerierung eines mehrstufigen digitalen Signals hoher Schrittgeschwindigkeit, unter Umwandlung in binäre Signalfolgen, der wenigstens zwei mit dem Signaleingang verbundene Differenzverstärker (T1, T2, T3, T5, T6) mit nachgeschalteten getakteten D-Flipflops enthält, dadurch gekennzeichnet, daß zur Regenerierung eines vierstufigen digitalen Signals der Digitalsignaleingang eines ersten Entscheiderelements (E1) mit einem Signaleingang des Regenerators verbunden ist, daß das erste Entscheiderelement einen direkt von einem Eingangssignal beaufschlagten Differenzverstärker und ein diesem nachgeschaltetes ersten getaktetes D-Flipflop (FF1) enthält, daß ein zweites Entscheiderelement (E2) mit einem Digitalsignaleingang und einem Steuersignaleingang des zweiten Entscheiderelements über eine erste Verzögerungsanordnung (T1) mit dem Eingang des Regenerators und der Steuersignaleingang mit dem Ausgang des ersten Entscheiderelements (E1) verbunden ist, daß das zweite Entscheiderelement (E2) eine Differenzverstärkeranordnung mit einem Multiemittertransistor (T3) enthält, die vom Steuersignaleingang her zwischen zwei Schwellenspannungen (U1, U3) umschaltbar ist und deren Ausgang über ein zweites getaktetes D-Flipflop (FF2) mit dem Ausgang des zweiten Entscheiderelements (E2) verbunden ist und daß vom Ausgang des ersten Entscheiderelements (E1) eine erste (X) und vom Ausgang des zweiten Entscheiderelements (E2) eine zweite (Y) binäre Signalfolge entnehmbar sind (Fig. 4).

2. Regenerator zur amplituden- und zeitmäßigen Regenerierung eines mehrstufigen digitalen Signals hoher Schrittgeschwindigkeit, unter Umwandlung in binäre Signalfolgen, der wenigstens zwei mit dem Signaleingang verbundene Differenzverstärker (T1, T2, T3, T5, T6) mit nachgeschalteten getakteten D-Flipflops enthält, dadurch gekennzeichnet, daß zur Regenerierung eines achtstufigen digitalen Signals der Digitalsignaleingang eines ersten Entscheiderelements (E1) mit einem Signaleingang des Regenerators verbunden ist, daß das erste Entscheiderelement einen direkt von einem Eingangssignal beaufschlagten Differenzverstärker und ein diesem nachgeschaltetes erstes getaktetes D-Flipflop (FF1) enthält, daß ein zweites Entscheiderelement (E2) mit einem Digitalsignaleingang und einem Steuersignaleingang vorgesehen ist, daß der Digitalsignaleingang des zweiten Entscheiderelements über eine erste Verzögerungsanordnung (T1) mit dem Eingang des Regenerators und der Steuersignaleingang mit dem Ausgang des ersten Entscheiderelements (E1) verbunden ist, daß das zweite Entscheiderelement (E2) eine Differenzverstärkeranordnung mit einem Multiemittertransistor (T3) enthält, die vom Steuersignaleingang her zwischen zwei Schwellenspannungen (U1, U3) umschaltbar ist und deren Ausgang über ein zweites getaktetes D-Flipflop (FF2) mit dem Ausgang des zweiten Entscheiderelements (E2) verbunden ist, daß ein drittes Entscheiderelement (E3) vorgesehen ist, dessen Digitalsignaleingang über eine zweite Verzögerungsanordnung (T2) mit dem Ausgang der ersten Verzögerungsanordnung (T1) verbunden ist, daß das dritte Entscheiderelement (E3) einen Eingang für ein erstes Steuersignal (S1) enthält, der mit dem Ausgang des ersten Entscheiderelementes (E1) verbunden ist, daß das dritte Entscheiderelement (E3) einen Eingang für ein zweites Steuersignal (S2) enthält, der mit dem Ausgang des zweiten Entscheiderelements (E2) verbunden ist, daß das dritte Entscheiderelement (E3) eine Differenzverstärkeranordnung enthält, die mittels der beiden Steuersignale (S1, S2) zwischen vier Schwellenspannungen umschaltbar ist und mit dem Ausgang der Differenzverstärkeranordnung ein drittes D-Flipflop (FF3) verbunden ist, dessen Ausgang den Ausgang (Z) des dritten Entscheiderelements darstellt, daß von den Ausgängen des ersten, zweiten und dritten Entscheiderelements binäre Signale (X, Y, Z) entnehmbar sind, die die binären Komponenten des achtstufigen digitalen Eingangssignals darstellen (Fig. 5).

3. Regenerator nach Patentansprüchen 1 oder 2, dadurch gekennzeichnet, daß das erste Entscheiderelement einen aus einem ersten und einem zweiten Transistor (T1, T2) gebildeten emittergekoppelten Differenzverstärker enthält und dabei der Basisanschluß des ersten Transistors (T1) mit dem Signaleingang und der Kollektoranschluß dieses Transistors mit dem Bezugspotential verbunden sind, daß der Basisanschluß des zweiten Transistors (T2) mit einer Quelle (Us) für eine Schwellenspannung verbunden ist, wobei die Schwellenspannung der mittleren Schwelle (U2, U4) des vier- bzw. achtstufigen digitalen Signals entspricht, daß der Kollektoranschluß des zweiten Transistors (T2) mit dem D-Eingang des nachgeschalteten ersten D-Flipflops (FF1) und über einen Ausgangswiderstand (RA) mit Bezugspotential verbunden ist (Fig. 1, Fig. 4, Fig. 5).

4. Regenerator nach Patentansprüchen 1 oder 2, dadurch gekennzeichnet, daß das zweite Entscheiderelement (E2) einen dritten Transistor (T3) in Form eines Multiemittertransistors mit zwei Emitteranschlüssen enthält, dessen Basisanschluß mit dem Signaleingang des zweiten Entscheiderelementes (E2) verbunden ist und dessen Kollektoranschluß an Bezugspotential angeschlossen ist, daß das zweite Entscheiderelement (E2) einen vierten Transistor (T4) enthält, dessen Basisanschluß mit dem Steuersignalanschluß (S) des zweiten Entscheiderelements und dessen Kollektoranschluß mit dem ersten Emitteranschluß des dritten Transistors (T3) und mit dem Emitteranschluß eines fünften Transistors (T5) verbunden ist, daß der Emitteranschluß des vierten Transistors (T4) mit dem Emitteranschluß eines siebten Transistors (T7) und über einen ersten Widerstand (R1) mit Betriebsspannung (—Ub) verbunden ist, daß der Kollektoranschluß des siebten Transistors (T7) mit dem zweiten Emitteranschluß des dritten Transistors (T3) und mit dem Emitteranschluß eines sechsten Transistors (T6) verbunden ist, daß der Kollektoranschluß des sechsten Transistors (T6) mit dem Kollektoranschluß des fünften Transistors (T5), mit dem D-Eingang eines nachgeschalteten zweiten D-Flipflops (FF2) und über einen Ausgangswiderstand (RA) mit Bezugspotential verbunden ist, daß der Basisanschluß des siebten Transistors (T7) mit einer Quelle für eine Referenzspannung (UR) verbunden ist, auf die sich die Steuersignale beziehen, daß der Basisanschluß des sechsten Transistors (T6) mit einer Quelle für eine Schwellenspannung verbunden ist, die der unteren Schwelle (U1, Fig. 4) des vier- bzw. der zweitniedrigsten Schwelle (U2, Fig. 5) des achtstufigen digitalen Signals entspricht und daß der Basisanschluß des fünften Transistors (T5) mit einer Quelle für eine Schwellenspannung verbunden ist, die der oberen Schwelle (U3, Fig. 4) des vier- bzw. der zweithöchsten Schwelle (U6, Fig. 5) des achtstufigen digitalen Signals entspricht (Fig. 2, 4, 5).

5. Regenerator nach Patentanspruch 1, dadurch gekennzeichnet, daß die Laufzeit durch die erste Verzögerungsanordnung (T1) der Signallaufzeit durch das erste Entscheiderelement (E1) entspricht.

6. Regenerator nach Patentanspruch 2, dadurch gekennzeichnet, daß die Laufzeit durch die erste Verzögerungsanordnung (T1) der Signallaufzeit durch das erste Entscheiderelement (E1) entspricht und daß die Laufzeit durch die zweite Verzögerungsanordnung (T2) der Signallaufzeit durch das zweite Entscheiderelement (E2) entspricht.

7. Regenerator nach Patentanspruch 2, 3 oder 4, dadurch gekennzeichnet, daß die Schwellenspannungen des dritten Entscheiderelements (E3) der ersten, dritten, fünften und siebenten Schwelle (U1, U3, U5, U7) des achtstufigen digitalen Signals entsprechen (Fig. 5).

8. Regenerator nach Patentansprüchen 2, 6 oder 7, dadurch gekennzeichnet, daß das dritte Entscheiderelement (E3) eine Differenzverstärkeranordnung enthält, die einen achten Transistor (T8) in Form eines Multiemittertransistors mit 4 Emitteranschlüssen enthält, daß der Basisanschluß des achten Transistors (T8) mit dem Signaleingang des dritten Entscheiderelements und der Kollektoranschluß dieses Emitters mit Bezugspotential verbunden sind, daß die Differenzverstärkeranordnung einen neunten Transistor (T9) enthält, dessen Emitteranschluß mit dem Kollektoranschluß eines zehnten Transistors (T10) und dem Kollektoranschluß eines elften Transistors (T11) verbunden ist, daß der Basisanschluß des elften Transistors (T11) mit dem Eingang des dritten Entscheiderelements für das erste Steuersignal verbunden ist, daß der Eingang des dritten Entscheiderelements (E3) für das zweite Steuersignal (S2) mit dem Basisanschluß des neunten Transistors (T9) und mit dem Basisanschluß eines sechzehnten Transistors (T16) verbunden ist, daß der Emitteranschluß des sechzehnten Transistors mit dem Emitteranschluß eines siebzehnten Transistors (T17) und dem Kollektoranschluß eines achtzehnten Transistors (T18) verbunden ist, daß der Emitteranschluß des achtzehnten Transistors (T18) mit dem Emitteranschluß des elften Transistors (T11) und über einen zweiten Widerstand (R2) mit Betriebsspannung (—Ub) verbunden ist, daß der Kollektoranschluß des neunten Transistors (T9) mit einem ersten Emitteranschluß des achten Transistors (T8) und mit dem Emitteranschluß eines zwölften Transistors (T12) verbunden ist, daß der Kollektoranschluß des zehnten Transistors (T10) mit einem zweiten Emitteranschluß des achten Transistors (T8) und mit dem Emitteranschluß eines dreizehnten Transistors (T13) verbunden ist, daß der Kollektoranschluß des sechszehnten Transistors (T16) mit einem dritten Emitteranschluß des achten Transistors (T8) und mit dem Emitteranschluß eines vierzehnten Transistors (T14) verbunden ist, daß der Kollektoranschluß des siebzehnten Transistors (T17) mit einem vierten Emitteranschluß des achten Transistors (T8) und mit einem Emitteranschluß eines fünfzehnten Transistors (T15) verbunden ist, daß der Basisanschluß des fünfzehnten Transistors (T15) mit einer Quelle für eine Schwellenspannung verbunden ist, die der ersten, also der untersten Schwelle (U1) des achtstufigen digitalen Signals entspricht, das der Basisanschluß eines vierzehnten Transistors (T14) mit einer Quelle für eine Schwellenspannung verbunden ist, die der dritten Schwelle (U3) des achtstufigen digitalen Signals entspricht, daß der Basisanschluß des dreizehnten Transistors (T13) mit einer Quelle für eine Schwellenspannung verbunden ist, die der fünften Schwelle (U5) des digitalen Signals entspricht, daß der Basisanschluß des zwölften Transistors (T12) mit einer Quelle für eine Schwellenspannung verbunden ist, die der obersten, also der siebenten Schwelle (U7) des achtstufigen digitalen Signals entspricht, daß die Kollektoranschlüsse des zwölften bis fünfzehnten Transistors (T12 . . . T15) miteinander und mit dem D-Eingang des dritten D-Flipflops und außerdem über einen Ausgangswiderstand (R$_A$) mit Bezugspotential verbunden sind, daß der Basisanschluß des achtzehnten Transistors (T18) mit einer Quelle für eine erste Referenzspannung U$_{R1}$ verbunden ist, daß die Basisanschlüsse des zehnten Transistors (T10) und des siebzehnten Transistors (T17) mit einer Quelle für eine zweite Referenzspannung (U$_{R2}$) verbunden sind, und daß die zweite Referenzspannung (U$_{R2}$) einen positiveren Pegel als die erste Referenzspannung (U$_{R1}$) aufweist (Fig. 3, 5).

9. Regenerator nach Patentansprüchen 2, 4 oder 8, dadurch gekennzeichnet, daß die zweiten Eingänge der mit Steuersignalen beaufschlagten Differenzverstärker (T9, T10; T16, T17; T11, T18); jeweils mit Quellen für die gegenphasigen Steuersignale anstelle von Quellen für Referenzspannungen (U$_{R1}$, U$_{R2}$) verbunden sind.

**Claims**

1. A regenerator for the amplitude and time-regeneration of a multi-level digital signal of high digit rate via conversion into binary signal sequences, which contains at least two differential amplifiers (T1, T2, T3, T5, T6) which are connected to the signal input and are followed by clocked D flip-flops, characterised in that for the regeneration of a fourlevel digital signal the digital signal input of a first decision element (E1) is connected to a signal input of the regenerator, that the first decision element includes a differential amplifier which is directly fed with an input signal and further includes a first clocked D flipflop (FF1) which is connected following the differential amplifier, that a second decision element (E2) is provided with a digital signal input and a control signal input, that the digital signal input of the second decision element is connected via a first delay arrangement (T1) to the input of the regenerator, and the control signal input is connected to the output of the first decision element (E1), that the second decision element (E2) includes a differential amplifier arrangement with a multi-emitter transistor (T3), where this differential amplifier arrangement can be switched over between two threshold voltages (U1, U3) from the control signal input and its output is connected via a second clocked D flip-flop (FF2) to the output of the second decision element (E2), an that a first (X) binary signal sequence can be produced from the output of the first decision element (E1) whereas a second (Y) binary sequence can be produced from the output of the second decision element (E2) (Fig. 4).

2. Regenerator for the amplitude- and time-regeneration of a multi-level digital signal of thigh digit rate via conversion into binary signal sequences, which includes at least two differential amplifiers (T1, T2, T3, T5, T6) which are connected to the signal input and which are followed by clocked D flip-flops, characterised in that for the regeneration of an eight-level digital signal the digital signal input of a first decision element (E1) is connected to a signal input of the regenerator, that the first decision element includes a differential amplifier which is directly fed with an input signal and further includes a first clocked D-flip-flop (FF1) which is connected following the differential amplifier, that a second decision element (E2) is provided with a digital signal input and a control signal input, that the digital signal input of the second decision element is connected via a first delay arrangement (T1) to the input of the regenerator, and the control signal input is is connected to the output of the first decision element (E1), that the second decision element (E2) includes a differential amplifier arrangement with a multi-emitter transistor (T3), where this differential amplifier arrangement can be switched over between two threshold voltages (U1, U3) from the control signal input and its output is connected via a second clocked D flip-flop (FF2) to the output of the second decision element (E2), that a third decision element (E3) is provided whose digital signal input is connected via a second delay arrangement (T2) to the output of the first delay arrangement (T1), that the third decision element (E3) includes an input for a first control signal (S1), which input is connected to the output of the first decision element (E1), that the third decision element (E3) includes an input for a second control signal (S2), which input is connected to the output of the second decision element (E2), that the third decision element (E3) includes a differential amplifier arrangement which can be switched over between four threshold voltages by means of the two control signals (S1, S2), and the output of the differential amplifier arrangement is connected to a third D flip-flop (FF3) whose output represents the output (Z) of the third decision element, that binary signals (X, Y, Z) which represent the binary components of the eight-level digital input signal can be produced from the outputs of the first, second and third decision elements (Fig. 5).

3. Regenerator as claimed in claim 1 or 2, characterised in that the first decision element includes an emitter-coupled differential amplifier which comprises a first and a second transistor (T1, T2) where the base terminal of the first transistor (T1) is connected to the signal input and the collector terminal of this transistor is connected to the reference potential, that the base terminal of the second transistor (T2) is connected to a source (U$_S$) for a threshold voltage, where the threshold voltage corresponds to the mean threshold (U2, U4) of the four-level and eight-level digital signal respectively, that the collector terminal of the second transistor (T2) is connected to the D-input of the following first D flip-flop (FF1) and is connected via an output resistance (R$_A$) to reference potential (Fig. 1, Fig. 4, Fig. 5).

4. Regenerator as claimed in claim 1 or 2, characterised in that the second decision element (E2) includes a third transistor (T3) in the form of a multi-emitter transistor having two emitter terminals, whose base terminal is connected to the signal input of the second decision element (E2) and whose collector terminal is connected to reference potential, that the second decision element (E2) includes a fourth transistor (T4) whose base terminal is connected to the control signal terminal (S) of the second decision element and whose collector terminal is connected to the first emitter terminal of the third transistor (T3) and to the emitter terminal of a fifth transistor (T5), that the emitter terminal of the fourth transistor (T4) is connected to the emitter terminal of a seventh transistor (T7) and is connected via a first resistor (R1) to operating voltage (−Ub), that the collector terminal of the seventh transistor (T7) is connected to the second emitter terminal of the third transistor (T3) and to the emitter terminal of a sixth transistor (T6), that the collector terminal of the sixth transistor (T6) is connected to the collector terminal of the fifth transistor (T5), is connected to the D-input of a following second D flip-flop (FF2), and is connected via an output resistor (R$_A$) to reference potential, that the base terminal of the seventh transistor (T7) is connected to a source for a reference voltage (U$_R$) to which the control signals relate, that the base terminal of the sixth transistor (T6) is connected to a source for a threshold voltage which correspond to the lower threshold (U1, Fig. 4) of the fourth from lowest and the second from lowest threshold (U2, Fig. 5) of the eight-level digital signal, and that base terminal of the fifth transistor (T5) is connected to a source for a threshold voltage which coresponds to the upper threshold (U3, Fig. 4) of the fourth from highest and the second from highest threshold (U6, Fig. 5) of the eight-level digital signal (Fig. 2, Fig. 4, Fig. 5).

5. Regenerator as claimed in claim 1, characterised in that the transit time through the first delay arrangement (T1) corresponds to the signal transit time through the first decision element (E1).

6. Regenerator as claimed in claim 2, characterised in that the transit time through the first delay arrangement (T1) corresponds to the signal transit time through the first decision element (E1), and that the transit time through the second delay arrangement (T2) corresponds to the signal transit time through the second decision element (E2).

7. Regenerator as claimed in claim 2, 3 or 4, characterised in that the threshold voltage of the third decision element (E3) correspond to the first, third, fifth and sevent thresholds (U1, U3, U5, U7) of the eight-level digital signal (Fig. 5).

8. Regenerator as claimed in claims 2, 6 or 7, characterised in that the third decision element (E3) includes a differential amplifier arrangement which includes an eight transistor (T8) in the form of a multi-emitter transistor having four emitter terminals, that the base terminal of the eighth transistor (T8) is connected to the signal input of the third decision element and the collector terminal of this emitter is connected to reference potential, that the differential amplifier arrangement includes a ninth transistor (T9) whose emitter terminal is connected to the emitter terminal of a tenth transistor (T10) and to the collector terminal of an eleventh transistor (T11), that the base terminal of the eleventh transistor (T11) is connected to the input of the third decision element for the first control signal, that the input of the third decision element (E3) for the second control signal (S2) is connected to the base terminal of the ninth transistor (T9) and to the base terminal of a sixteenth transistor (T16), that the emitter terminal of the sixteenth transistor is connected to the emitter terminal of seventeenth transistor (T17) and to the collector terminal of an eighteenth transistor (T18), that the emitter terminal of the eighteenth transistor (T18) is connected to the emitter terminal of the eleventh transistor (T11) and is connected via a second resistor (R2) to the operating voltage (−Ub), that the collector terminal of the ninth transistor (T9) is connected to a first emitter terminal of the eight transistor (T8) and to the emitter terminal of a twelfth transistor (T12), that the collector terminal of the tenth transistor (T10) is connected to a second emitter terminal of the eighth transistor (T8) and to the emitter terminal of a thirteenth transistor (T13), that the collector terminal of the sixteenth transistor (T16) is connected to a third emitter terminal of the eighth transistor (T8) and to the emitter terminal of a fourteenth transistor (T14), that the collector terminal of the seventeenth transistor (T17) is connected to a fourth emitter terminal of the eighth transistor (T8) and to an emitter terminal of a fifteenth transistor (T15), that the base terminal of the fifteenth transistor (T15) is connected to a source for a threshold voltage which corresponds to the first, thus the lowest, threshold (U1) of the eight-level digital signal, that the base terminal of a fourteenth transistor (T14) is connected to a source for a threshold voltage which corresponds to the third threshold (U3) of the eight-level digital signal, that the base terminal of the thirteenth transistor (T13) is connected to a source for a threshold voltage which corresponds to a fifth threshold (U5) of the digital signal, that the base terminal of the twelfth transistor (T12) is connected to a source for a threshold voltage which corresponds to the uppermost, thus the seventh, threshold (U7) of the eight-level digital signal, that the collector terminals of the twelfth to fifteenth transistors (T12 . . . T15) are connected to one another and to the D-input of the third D-flip-flop and are also connected via an output resistor ($R_A$) to reference potential, that the base terminal of the eighteenth transistor (T18) is connected to a source for a first reference voltage ($U_{R1}$), that the base terminals of the tenth transistor (T10) and the seventeenth transistor (T17) are connected to a source for a second reference voltage ($U_{R2}$), and that the second reference voltage ($U_{R2}$) has a more positive level than the first reference voltage ($U_{R1}$) (Fig. 3, Fig. 5).

9. Regenerator as claimed in claims 2, 4 or 8, characterised in that the second inputs of the differential amplifiers (T9, T10; T16, T17; T11, T18) which are supplied with control signals are each connected to sources for the opposite-phase control signals instead of sources for reference voltages ($U_{R1}$, $U_{R2}$).

**Revendications**

1. Régénerateur permettant la régénération, du point de vue de l'amplitude et du temps, d'un signal numérique à plusieurs niveaux circulant avec une vitesse de modulation élevée, moyennant une transformation en suites de signaux binaires, et qui comporte au moins deux amplificateurs différentiels (T1, T2, T3, T5, T6) reliés à l'entrés des signaux et en aval desquels sont banchées des bascules bistables de type D commandées de façon cadencée, caractérisé par le fait que pour la régénération d'un signal numérique à quatre niveaux, l'entrée du signal numérique d'un premier organe de décision (E1) est reliée à une entrée des signaux du régénérateur, que le premier organe de décision contient un amplificateur différentiel chargé directement par un signal d'entrée et une première bascule bistable de type D (FF1) commandée de façon cadencée et branchée en aval de cet amplificateur, qu'il est prévu un second organe de décision (E2) possédant une entrée des signaux numériques et une sortie des signaux numériques, que l'entrée des signaux numériques du second organe de décision est reliée par l'intermédiaire d'un premier dispositif de retardement (T1) à la sortie du régénérateur et que l'entrée des signaux de commande est reliée à la sortie du premier organe de décision (E1), que le second organe de décision (E2) contient un dispositif amplificateur différentiel comportant un transistor (T3) à émetteurs multiples, qui peut être commuté à partir de l'entrée des signaux de commande entre deux seuils de commutation (U1, U3) et dont la sortie est reliée par l'intermédiaire d'une seconde bascule bistable de type D (FF2) commandée de façon cadencée, à la sortie du second organe de décision (E2), et qu'une première suite de signaux binaires (X) peut être prélevée sur la sortie du premier organe de décision (E1) et qu'une seconde suite de signaux binaires (Y) peut être prélevée sur la sortie du second organe de décision (E2) (Fig. 4).

2. Régénérateur permettant la régénération, du point de vue de l'amplitude et du temps, d'un signal numérique à plusieurs niveaux circulant avec une vitesse de modulation élevée, moyennant une transformation en suites de signaux binaires, et qui comporte au moins deux amplificateurs différentiels (T1, T2, T3, T5, T6) reliés à l'entrée des signaux et en aval desquels sont branchées des bascules bistable de type D commandées de façon cadencée, caractérisé par le fait que pour la régénération d'un signal numérique à huit niveaux, l'entré des signaux numériques d'un premier organe de décision (E1) est reliée à une entrée des signaux du régénérateur, que le premier organe de décision contient un amplificateur différentiel chargé directement par un signal d'entrée et une première bascule bistable de type D (FF1) branchée en aval de cet amplificateur, qu'il est prévu un second organe de décision (T2) comportant une entrée des signaux numériques et une sortie des signaux numériques que l'entrée des signaux numériques du second organe de décision est reliée par l'intermédiaire d'un premier dispositif de retardement (T1) à l'entrée du régénérateur et que l'entrée des signaux de commande est reliée à la sortie du premier organe de décision (E1), que le second organe de décision (E2) contient un dispositif amplificateur différentiel comportant un transistor (T3) à émetteur multiple, qui peut être commuté, à partir de l'entrée de commande des signaux, entre deux tensions de seuil (U1, U3) et dont la sortie est reliée par l'intermédiaire d'une seconde bascule bistable de type D (FF2) commandée de façon cadencée à la sortie du second organe de décision (E2), qu'il est prévu un troisième organe de décision (E3) dont l'entrée des signaux numériques est reliée par l'intermédiaire d'un second dispositif de retardement (T2) à la sortie du premir dispositif de retardement (T1), que le troisième organe de décision (E3) contient une entrée pour un premier signal de commande (S1), qui est reliée à la sortie du premir organe de décision (E1), que le troisième organe de décision (E3) contient une entrée pour un second signal de commande (S2), qui est reliée à la sortie du second organe de décision (E2), et que le troisième organe de décision (E3) contient un dispositif amplificateur différentiel qui peut être commuté au moyen des deux signaux de commande (S1, S2) entre quatre tensions de seuil et qu'à la sortie du dispositif amplificateur différentiel est reliée une troisième bascule bistable de type D (FF3) dont la sorti représente la sortie (Z) du troisième organe de décision, et que sur les sorties des premier, second et troisième organes de décision, il est possible de prélever des signaux binaires (X, Y, Z) qui représentent les composantes binaires du signal d'entrée numérique à huit niveaux (Fig. 5).

3. Régénérateur suivant les revendications 1 ou 2, caractérisé par le fait que le premier organe de décision contient un amplificateur différentiel à émetteurs couplés, formé par un premier et par un second transistor (T1, T2), que la borne de base du premier transistor (T1) est reliée à l'entrée des signaux et que la borne de base de ce transistor est reliée au potentiel de référence, que la borne de base du second transistor (T2) est reliée à une source (Us) délivrant une tension de seuil, cette tension de seuil correspondant au seuil moyen (U2, U4) du signal numérique à quatre ou à huit niveaux, et que la borne de collecteur du second transistor (T2) est reliée à l'entrée D de la première bascule bistable de type D (FF1), branchée en aval, et, par l'intermédiaire d'une résistance de sortie (R₁) au potentiel de référence (Fig. 1, Fig. 4, Fig. 5).

4. Régénérateur suivant les revendications 1 ou 2, caractérisé par le fait que le second organe de décision (E2) contient un troisième transistor (T3) réalisé sous la forme d'un transistor à émetteurs multiples comportant deux bornes d'émetteur et dont la borne de base est reliée à l'entrée des signaux du second organe de décision (E2) et dont la borne de collecteur est placée au potentiel de référence, que le second organe de décision (E2) contient un quatrième transistor (T4) dont la borne de base est reliée à la borne des signaux de commande (S) du second organe de décision et dont la borne de collecteur est reliée à la première borne d'émetteur du troisième transistor (T3) et à la borne d'émetteur d'un cinquième transistor (T5), que la borne d'émetteur du quatrième transistor (T4) est reliée à la borne d'émetteur d'un septième transistor (T7) et, par l'intermédiaire d'une première résistance (R1), à la tension de fonctionnement (—Ub), que la borne de collecteur du septième transistor (T7) est reliée à la seconde borne d'émetteur du troisième transistor (T3) et à la borne d'émetteur d'un sixième transistor (T6), que la borne de collecteur du sixième transistor (T6) est reliée à la borne de collecteur du cinquième transistor (T5), à l'entrée D d'une seconde bascule bistable de type D (FF2) branchée en aval et, par l'intermédiaire d'une résistance de sortie (R_A), au potentiel de référence, que la borne de base du septième transistor (T5) est reliée à une source délivrant une tension de référence (U_R), à laquelle se rapportent les signaux de commande, que la borne de base du sixième transistor (T6) est reliée à une source prévue pour une tension de seuil qui correspond au seuil inférieur (U1, Fig. 4) du signal numérique à quatre niveaux ou au seuil le plus faible en second (U2, Fig. 5) du signal numérique à huit niveaux et que la borne de base du cinquième transistor (T5) est reliée à une source pour une tension de seuil qui correspond au seuil supérieur (U3, Fig. 4) du seuil le plus élevé en quatrième position ou du seuil le plus élevé en seconde position (U6, Fig. 5) du signal numérique à huit niveaux (Fig. 2, Fig. 4, Fig. 5).

5. Régénérateur suivant la revendication 1, caractérisé par le fait que le temps de transit dans le premier dispositif de retardement (U1) correspond au temps de transit des signaux à travers le premier organe de décision (E1).

6. Régénérateur suivant la revendication 2, caractérisé par le fait que le temps de transit dans le premier dispositif de retardement (T1) correspond au temps de transit à travers le premier organe de décision (E1) et que le temps de transit à travers le second dispositif de retardement (T2) correspond au temps de transit des signaux à travers le second organe de décision (T2).

7. Régénérateur suivant la revendication 2, 3 ou 4, caractérisé par le fait que les tensions de seuil du troisième organe de décision (E3) correspondent au premier, au troisième, au cinquième et au septième seuils (U1, U3, U5, U7) du signal numérique à huit niveaux (Fig. 5).

8. Régénérateur suivant les revendications 2, 6 ou 7 caractérisé par le fait que le troisième organe de décision (E3) contient un dispositif amplificateur différentiel qui contient un huitième transistor (T8) réalisé sous la forme d'un transistor à émetteurs multiples comportant quatre bornes d'émetteur, que la borne de base du huitième transistor (T8) est reliée à l'entrée des signaux du troisième organe de décision et que la borne de collecteur de cet émetteur est reliée au potentiel de référence, que le dispositif amplificateur différentiel contient un neuvième transistor (T9) dont la borne d'émetteur est reliée à la borne d'émetteur d'un dixième transistor (T10) et à la borne de collecteur d'un onzième transistor (T11), que la borne de base du onzième transistor (T11) est reliée à l'entrée du troisième organe de décision pour le premier signal de commande, que l'entrée du troisième organe de décision (E3) pour le second signal de commande (S2) est reliée à la borne de base du neuvième transistor (T9) et à la borne de base d'un seizième transistor (T16), que la borne d'émetteur du seizième transistor est reliée à la borne d'émetteur d'un dix-septième transistor (T17) et à la borne de collecteur d'un dix-huitième transistor (T18), que la borne d'émetteur du dix-huitième transistor (T18) est reliée à la borne d'émetteur du onzième transistor (T11) et, par l'intermédiaire d'une seconde résistance (R2) à la tension de fontionnement (—Ub), que la borne de collecteur du neuvième transistor (T9) est reliée à une première borne d'émetteur du huitième transistor (T8) et à la borne d'émetteur d'un douzième transistor (T12), que la borne collecteur du dixième transistor (T10) est reliée à une seconde borne d'émetteur du huitième transistor (T8) et à la borne d'émetteur d'un treizième transistor (T13), que la borne de collecteur du seizième transistor (T16) est reliée à une troisième borne d'émetteur du huitième transistor (T8) et à la borne d'émetteur d'un quatorzième transistor (T14), que la borne de collecteur du dix-septième transistor (T17) est reliée à une quatrième borne d'émetteur du huitième transistor (T8) et à une borne d'émetteur d'un quinzième transistor (T15), que la borne de base du quinzième transistor (T15) est reliée à une source pour une tension de seuil qui correspond au premier seuil, c'est-à-dire au seuil le plus bas (U1) du signal numérique à huit niveaux, que la borne de base d'un quatourzième transistor (T14) est reliée à une source pour une tension de seuil que correspond au troisième seuil (U3) du signal numérique à huit niveaux, que la borne de base du treizième transistor (T13) est reliée à une source pour une tension de seuil qui correspond au cinquième niveau (U5) du signal numérique, que la borne de base du douzième transistor (T12) est reliée à une source pour une tension de seuil qui correspond au seuil supérieur, c'est-à-dire au septième seuil (U7) du signal numérique à huit niveaux, que les bornes de collecteur du douzième jusqu'au quinzième transistors (T12 ... T15) sont reliées entre elles et à l'entrée D de la troisième bascule bistable de type D et, en outre, par l'intermédiaire d'une résistance de sortie (R$_A$) au potentiel de référence, que la borne de base du dix-huitième transistor (T18) est reliée à une source pour une première tension de référence (U$_{R1}$), que les bornes de base du dixième transistor (T10) et du dix-septième transistor (T17) sont reliées à une source pour une seconde tension de référence (U$_{R2}$), et que la seconde tension de référence (U$_{R2}$) possède un niveau plus positif que la première tension de référence (U$_{R1}$) (Fig. 3, Fig. 5).

9. Régénérateur suivant les revendications 2, 4 ou 8, caractérisé par le fait que les secondes entrées des amplificateurs différentiels (T9, T10; T16, T17; T11, T18) chargés par des signaux de commande sont reliées respectivement à des sources pour les signaux de commande en opposition de phase et non à des sources pour des tensions de référence (U$_{R1}$, U$_{R2}$).

FIG 1

u(t) ○

T1

T2

U_S

R_A

−U_b  I_0

FF1

D

Q

A

TS

FIG 2

u(t) ○

T3

T5  U2

T6  U1

T4

T7  U_R

R1  I_0

−U_b

R_A

FF2

D

Q

A

TS

| S | SW |
|---|-----|
| 1 | U2 |
| 0 | U1 |

FIG 3

u(t) ○

T8

T9

T10  U_R2

T11

R2  I_0

−U_b

R_A

T12  U4

T13  U3

T14  U2

T15  U1

T16

T17  U_R2

T18  U_R1

S2 ○

S1 ○

FF3

D

Q

A

TS

| S1 | S2 | SW |
|----|----|-----|
| 1 | 1 | U4 |
| 1 | 0 | U3 |
| 0 | 1 | U2 |
| 0 | 0 | U1 |

# FIG 4

# FIG 5